Europäisches Patentamt

European Patent Office

Office européen des brevets

(19)

(11) **EP 1 252 416 B1**

(12) **EUROPEAN PATENT SPECIFICATION**

(45) Date of publication and mention
of the grant of the patent:
**20.07.2005 Bulletin 2005/29**

(51) Int Cl.⁷: **E21B 47/12**, H04B 13/02,
E21B 34/06

(21) Application number: **01901196.4**

(22) Date of filing: **19.01.2001**

(86) International application number:
**PCT/EP2001/000738**

(87) International publication number:
**WO 2001/055555 (02.08.2001 Gazette 2001/31)**

(54) **CHOKE INDUCTOR FOR WIRELESS COMMUNICATION AND CONTROL IN A WELL**

DROSSELSPULE FÜR DRAHTLOSES KOMMUNIKATIONS- UND STEUERUNGSSYSTEM IN
EINEM BOHRLOCH

INDUCTEUR DE DUSE DESTINE A LA COMMUNICATION ET A DES OPERATIONS DE
COMMANDE SANS FIL DANS UN PUITS

(84) Designated Contracting States:
**AT BE CH CY DE DK ES FI FR GB GR IE IT LI LU
MC NL PT SE TR**

(30) Priority: **24.01.2000 US 177999 P
24.01.2000 US 178000 P
02.03.2000 US 186376 P
02.03.2000 US 186380 P**

(43) Date of publication of application:
**30.10.2002 Bulletin 2002/44**

(73) Proprietor: **SHELL INTERNATIONALE
RESEARCH MAATSCHAPPIJ B.V.
2596 HR Den Haag (NL)**

(72) Inventors:
• **BASS, Ronald, Marshall
Houston, TX 77005 (US)**
• **BERCHENKO, Ilya, Emil
Friendswood, TX 77456 (US)**
• **BURNETT, Robert, Rex
Katy, TX 20711 (US)**

• **CARL, Frederick, Gordon, Jr.
Houston, TX 77036 (US)**
• **HIRSCH, John, Michelle
Houston, TX 77055 (US)**
• **SAVAGE, William, Mountjoy
Houston, TX 77074 (US)**
• **STEGEMEIER, George, Leo
Houston, TX 77096 (US)**
• **VINEGAR, Harold, J.
Houston, TX 77096 (US)**

(56) References cited:
**EP-A- 0 028 296          EP-A- 0 964 134
WO-A-99/37044          FR-A- 2 677 134
GB-A- 2 083 321          US-A- 5 995 020**

• **SAKATA F ET AL: "PERFORMANCE ANALYSIS
OF LONG DISTANCE TRANSMITTING OF
MAGNETIC SIGNAL ON CYLINDRICAL STEEL
ROD" IEEE TRANSLATION JOURNAL ON
MAGNETICS IN JAPAN,US,IEEE INC, NEW
YORK, vol. 8, no. 2, 1 February 1993 (1993-02-01),
pages 102-106, XP000355473 ISSN: 0882-4959**

**Description**

FIELD OF THE INVENTION

The present invention relates to the use of a ferromagnetic choke in a petroleum well where a voltage potential is developed across the choke to power and communicate with devices and sensors in the well using otherwise conventional and pre-existing metal structures of the well as the principal conductive paths. In one aspect, it relates to providing power and/or communications to a device downhole in a borehole of a well using an electrical circuit formed in a piping structure by using at least one unpowered induction choke.

DESCRIPTION OF RELATED ART

Several methods have been devised to place controllable valves and other devices and sensors downhole on the tubing string in a well, but all such known devices typically use an electrical cable along the tubing string to power and communicate with the devices and sensors. It is undesirable and in practice difficult to use a cable along the tubing string either integral with the tubing string or spaced in the annulus between the tubing and the casing because of the number of failure mechanisms present in such a system. Other methods of communicating within a borehole are described in U. S. Patent Nos. 5,493,288; 5,576,703; 5,574,374; 5,467,083; 5,130,706.

U.S. Patent 6,070,608 describes a surface controlled gas lift valve for use in oil wells. Methods of actuating the valve include electro-hydraulic, hydraulic, and pneumo-hydraulic. Sensors relay the position of the variable orifice and critical fluid pressures to a panel on the surface. However, when describing how electricity is provided to the downhole sensors and valves, the means of getting the electric power/signal to the valves/ sensors is described as an electrical conduit that connects between the valve/sensor downhole and a control panel at the surface. U.S. Patent 6,070,608 does not specifically describe or show the current path from the device downhole to the surface. The electrical conduit is shown in the figures as a standard electrical conduit, i.e., an extended pipe with individual wires protected therein, such that the pipe provides physical protection and the wires therein provide the current path. But such standard electrical conduits can be difficult to route at great depths, around turns for deviated wells, along multiple branches for a well having multiple lateral branches, and/or in parallel with coil production tubing. Hence, there is a need for a system and method of providing power and communications signals to downhole devices without the need for a separate electrical conduit filled with wires and strung along side of production tubing.

U.S. Patent No. 4,839,644 describes a method and system for wireless two-way communications in a cased borehole having a tubing string. However, this system describes a downhole toroid antenna for coupling electromagnetic energy in a waveguide TEM mode using the annulus between the casing and the tubing. This toroid antenna uses an electromagnetic wave coupling which requires a substantially nonconductive fluid (such as refined, heavy oil) in the annulus between the casing and the tubing and a toroidal cavity and wellhead insulators. Therefore, the method and system described in U.S. Patent No. 4,839,644 is expensive, has problems with brine leakage into the casing, and is difficult to use as a scheme for a downhole two-way communication.

Other downhole communication schemes such as mud pulse telemetry (U.S. Patent Nos. 4,648,471; 5,887,657) have shown successful communication at low data rates but are of limited usefulness as a communication scheme where high data rates are required or it is undesirable to have complex, mud pulse telemetry equipment downhole. Still other downhole communication methods have been attempted, see U. S. Pat. Nos.5,467,083; 4,739,325; 4,578,675; 5,883,516; and 4,468,665 as well as downhole permanent sensors and control systems: U.S. Pat. Nos. 5,730,219; 5,662,165; 4,972,704; 5,941,307; 5,934,371; 5,278,758; 5,134,285; 5,001,675; 5,730,219; 5,662,165.

It is common practice to operate multiple wells within a field by conveying the fluids from each well to a central facility where they are gathered and may be initially treated before being transferred to downstream processing plants such as refineries. It would be desirable to provide the capability to control the wells from this central field facility, but this is in practice little done since by conventional methods such a capability would require that power and signal lines be dispersed throughout the field. Such an infrastructure would incur costs for both installation and for maintenance, and the power and signal lines would be vulnerable to damage by the elements or vehicle transit, and would also be subject to vandalism or theft.

It would, therefore, be a significant advance in the operation of petroleum wells if the tubing, casing, liners and other conductors installed in the well or as ancillary surface facilities such as collection lines could be used for the communication and power conductors to control and operate devices and sensors downhole in a petroleum well.

Induction chokes have been used in connection with sensitive instrumentation to protect against surges and stray voltage. For example, most personal computers have some sort of choke incorporated into its AC power cord and video signal cable for such protection. Such protection chokes work well for their intended purpose, but do not operate to define a power or communication circuit.

The device and method according to the preamble of claims 1 and 17 are known from European patent application EP 0964134. In the known device and method an induction choke is arranged around a production tubing of an oil well. The known choke is equipped with an electric cable, which is coiled around a ferromagnetic core which cable supplies electric power to a downhole device. The winding of such an electric cable around a core is expensive and the cable can easily be damaged when the tubing is lowered through the well and is prone to overheating and failure.

All references cited herein are incorporated by reference to the maximum extent allowable by law. To the extent a reference may not be fully incorporated herein, it is incorporated by reference for background purposes and indicative of the knowledge of one of ordinary skill in the art.

## SUMMARY OF THE INVENTION

The method and device according to the invention are characterized by the characterizing features of claims 1 and 17.

The problems and needs outlined above are largely solved and met by the petroleum well having one or more current impedance devices such as the induction chokes in accordance with the present invention. Broadly speaking, the petroleum well includes a cased wellbore having a tubing string positioned within and longitudinally extending within the casing. A controllable valve, sensor, or other device is coupled to the tubing. The valve, sensor, or other device is powered and controlled from the surface. Communication signals and power are sent from the surface using the tubing, casing, or liner as the conductor. For example, AC current is directed down the tubing to a point where the current encounters a choke. The voltage potential developed across the choke is used to power communication modems, valves, electronic devices and sensors near the choke.

In more detail, a surface computer includes a modem with an AC signal imparted to a conductive conduit, such as the tubing and/or casing. The AC signal develops a potential across a choke and a power supply creates DC voltage to power a connected controllable valve, sensor, or other device. Preferably, the casing or liner terminates at earth and is used as the ground return conductor, although an independent ground wire or other conductor may be used. In a preferred embodiment of a gas lift well, the powered device comprises a controllable valve that regulates passage of gas between the annulus and the interior of the tubing.

In enhanced forms, the petroleum well includes one or more sensors downhole which are preferably in contact with the downhole power and communications module and communicate with the surface computer. Such sensors as temperature, pressure, acoustic, valve position, flow rates, and differential pressure gauges are advantageously used in many situations. The sensors supply measurements to the modem for transmission to the surface or directly to a programmable interface controller operating a downhole device, such as controllable valve for controlling the gas flow through the valve.

The current impedance devices of the present invention comprise induction chokes of a ferromagnetic material in a preferred form. Such ferromagnetic chokes are coupled to a conductor (tubing, casing, liner, etc.) to act as a series impedance to current flow. In one form, a ferromagnetic choke is placed around the tubing downhole and the AC used for power and communication signal is imparted to the tubing, casing or liner near the surface. The downhole choke around the tubing, casing or liner develops a potential used to power and communicate with a controllable valve or sensor.

In another form, a surface computer is coupled via a surface master modem and the tubing or casing to a plurality of laterals, each having a downhole slave modem to operate a controllable valve in a lateral. The surface computer can receive measurements from a variety of sources, such as the downhole sensors, measurements of the oil output, and measurements of the fluid flow in each lateral. Using such measurements, the computer can compute an optimum position of each controllable valve, more particularly, the optimum amount of fluid production from each lateral. Additional enhancements are possible, such as controlling the amount of compressed gas input into the well at the surface, controlling a surfactant injection system, and receiving production and operation measurements from a variety of other wells in the same field to optimize the production of the field.

Construction of such a petroleum well is designed to be as similar to conventional construction methodology as possible. That is, the well completion process comprises cementing a casing or liner within the borehole, placing production tubing within the casing or liner and generally concentric with such casing or liner, and placing a packer above the production zone to control fluid passage in the annulus between the tubing and the casing or liner. The completed well includes a choke concentric with the tubing, casing or liner. After cementing the casing is partially isolated from the earth. The tubing string passes through the casing and packer and communicates with the production zone In the section of the tubing string near the choke, sensors or operating devices are coupled to the string. In a preferred form, a side pocket mandrel for receiving a wireline insertable and retrievable sensor or device is used. With such configuration, a controllable gas lift valve or sensor pod may be inserted in the side pocket mandrel. Alternatively, such a controllable gas lift valve or sensor pod may be directly permanently coupled to the tubing (i.e. "tubing conveyed"). A power and communications module uses the voltage potential developed across the choke to power the valve, sensors, and modem.

A sensor and communication pod can be inserted without the necessity of including a controllable gas lift valve or other control device. That is, an electronics module having pressure, temperature or acoustic sensors, power supply, and a modem is inserted into a side pocket mandrel for communication to the surface computer using the tubing and casing conductors. Alternatively, such electronics modules may be mounted directly on the tubing and not be configured to be wireline replaceable. If directly mounted to the tubing an electronic module or a device may only be replaced by pulling the entire tubing string. In another form, an insulated tubing section near the wellhead may be used to ensure electrical isolation.

In a broad aspect, the present invention relates to a current impedance device, particularly useful in petroleum wells, comprising a cylindrical choke of ferromagnetic material having an annular bore extending longitudinally therein and adapted for receiving petroleum well cylindrical conductor therein. Many modifications are, of course possible, with such ferromagnetic chokes being applicable to casing, tubing, liners, and headers and other conductors used downhole in a petroleum well, and also to surface piping such as collection lines.

## BRIEF DESCRIPTION OF THE DRAWINGS

Other objects and advantages of the invention will become apparent upon reading the following detailed description and upon referencing the accompanying drawings, in which:

Fig. 1 is a schematic of a petroleum well incorporating induction chokes and associated communication, measurement and control pods in accordance with the methods of the present invention;

Fig. 2 is related to Fig. 1, and shows the electrical equivalent circuit of the well of Fig. 1;

Fig. 3a is related to Fig. 1, and shows the overall assembly of one of the chokes of Fig. 1;

Fig. 3b is related to Fig. 3a, and shows in detail the components used in the construction of the choke assembly of Fig. 3a;

Fig. 4a is a longitudinal cross-section of a choke disposed between tubing and casing;

Fig. 4b is an axial cross-section of the choke of Fig. 4a disposed between tubing and casing;

Fig. 4c is a longitudinal cross-section of a choke external to both tubing and casing;

Fig. 4d is an axial cross-section of the choke of Fig. 4c external to both tubing and casing;

Fig. 5 is a schematic of a petroleum well illustrating the electrical schematic of an induction choke;

Fig. 6 is a schematic of a multilateral petroleum well incorporating electrical chokes of the present invention;

Fig. 7 is a schematic showing the use of chokes to provide electrical power and communications between a central field facility and individual well heads using collection lines as the transmission path;

Fig. 8 shows a well in accordance with another embodiment of the present invention, in which a plurality of chokes provide power to downhole electrical modules using a serial power configuration;

Fig. 9 shows a system in accordance with another embodiment of the present invention, in which a plurality of chokes provide power to downhole electrical modules using a parallel power configuration; and

Fig. 10 shows a well in accordance with another embodiment of the present invention, in which chokes are disposed external to both tubing and casing.

## DESCRIPTION OF PREFERRED EMBODIMENTS

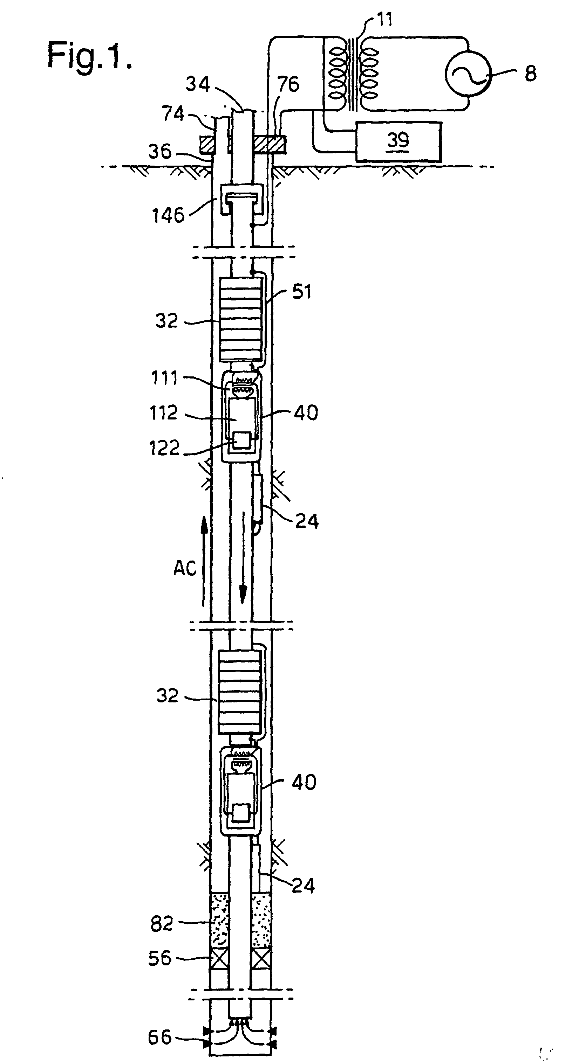

Turning to the drawings, a petroleum well in accordance with a preferred embodiment of the present invention is illustrated. Fig. 1 illustrates an oil well consisting of casing 36 extending from the surface and containing production tubing 34. At the well head the upper portion of the production tubing is electrically isolated from the lower portion by means of an electrically isolating tubing hanger 146. At depth within the well the annular space between casing 36 and tubing 34 is occupied by completion fluid 82, and an electrically conductive packer 56 hydraulically isolates the completion fluid from the production zone 66. Fluids from the production zone 66 are thus conveyed to the surface by passage through the production tubing 34. In Fig. 1 the disposition of two chokes 32 is shown at depth within the well, each of which is used to power an electrical pod 40. These pods implement any combination of communication, measurement and control functions to assist well production operations.

The casing 36 is generally conventional i.e. it is typically cemented in sections in the borehole during well completion. Similarly the tubing string 34 is conventional comprising a plurality of elongated tubular production pipe sections joined by threaded couplings at each end of each tubing section.

Referring still to Fig. 1, the general disposition of surface equipment is illustrated, consisting of a surface alternating current power source 8, a 1:10 current ratio power transformer 11, and a surface modem 39. One output side of the power transformer 11 and the modem 39 circuits is electrically connected through a pressure sealed feed through 76 to the production tubing 34 section below the electrically isolating joint 146. The other output side of the power transformer 11 and the surface modem 39 circuits is electrically connected to the well casing 36.

For illustrative purposes, Fig. 1 shows each pod being used to power and control a gas lift valve 40. For this purpose a suitable implementation of the pod consists of a 2:15Volt power transformer 31, and a main printed circuit board (PCB) comprising a slave modem 33 and other electrical components to power and control the gas lift valve, and to interface with sensors which may be supported by the pod to measure local physical or chemical variables such as annulus pressure, tubing pressure, composition of fluids, etc. The modems within the pods communicate with the modem at the surface, allowing data to be transferred from each pod to the surface, and instructions to be passed from the surface to control the gas lift valve.

While Fig. 1 illustrates the case where two downhole modules are operated in the well, it will be readily apparent that the same principle may be used to provide an arbitrary number of downhole modules. This may be useful in an application where a conductive completion fluid is present in the annulus before unloading a gas-lift well. Each choke will not work sufficiently to develop a voltage potential at its respective device when the choke is submerged in conductive fluid. As the conductive fluid is progressively removed during the unloading process, each device can receive power and/or communications (thus being controllable) when the respective choke is no longer submerged in conductive fluid. Hence, as the conductive fluid level drops during unloading, the devices sequentially become controllable, which can aid in achieving a more controllable unloading or kickoff procedure. Hence, the present invention is useful in all operations of the well-unloading, kickoff, or production.

The portion of the tubing 34 and casing 36 between the isolating hanger 146 and the chokes 32 may be viewed as a power and communications path. Typically, such a configuration would not allow AC power or electrical signals to be passed up or down the well using the tubing as one conductor and the casing as the other conductor. However, the disposition of the chokes 32 alters the electrical characteristics of the well metal structure providing a system and method to pass AC power and communication signals up and down the bore hole of the well. In a generic sense, the term "piping structure" is used to denote tubing, casing, hangers, liners, risers or any of a variety of metallic conductors, usually subsurface, but surface applications are also possible. "Wireless" means the absence of a conventional, insulated electrical conductor, such as a dedicated insulated wire; the tubing, casing, or other piping structure are not considered a wire conductor.

The chokes 32 are manufactured of material having a high magnetic permeability at the frequencies of the AC power and the modem communication carrier frequency.

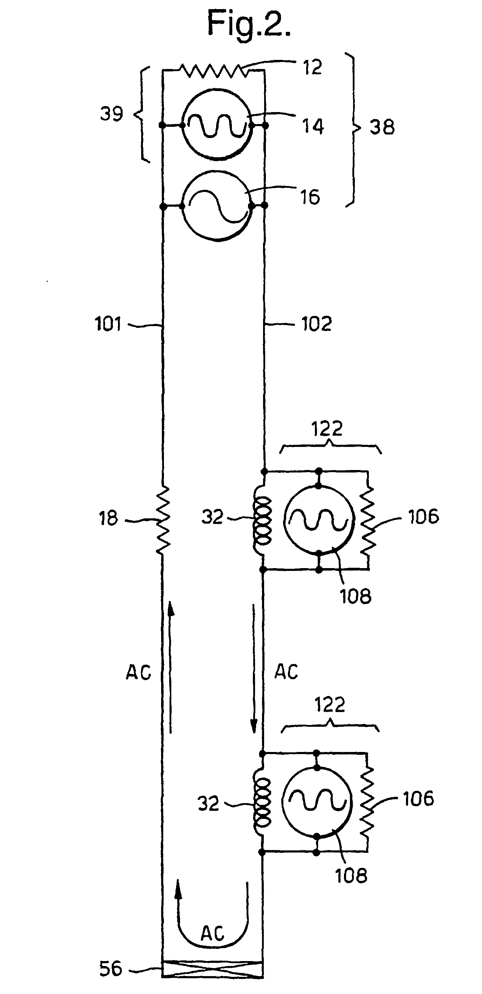

Referring to Fig. 2, the electrical equivalent circuit of this power and communications path may be analyzed. The casing and tubing form the major transmission paths for both the power and communication signals. The casing is represented by the conductor 101. The tubing is represented by conductor 102. Resistor 18 represents the combined distributed resistance offered by casing and tubing, and is typically of the order of 1 Ohm. The choke impedances are represented by inductors 32. At the frequency of the AC power the reactive impedance offered by each choke is of the order of 2 Ohms.

Referring still to Fig. 2, the surface modem ensemble 39 is represented by resistor 12 for its receiver, and an AC source 14 for its transmitter. AC power input at the surface is represented by AC source 16. The downhole electronic pods associated with each choke are represented by power converter and modem ensembles 122, composed of resistors 106 for the power converters and modem receivers, and AC sources 108 for the modem transmitters. The circuit is completed by the metal packer 56 which has a negligibly small electrical impedance.

It is seen from Fig. 2 that the downhole pods are powered by the AC voltage developed on the tubing by the chokes, caused by the back-EMF created by the passage of current along the tubing which passes through the choke. The chokes are designed to develop about 2 Volts from the AC which passes through them, and this AC is converted to DC in the power conditioning circuit which is coupled through the power supply input transformer, following standard practice for such AC-to-DC power conversion and conditioning circuits. This DC power is typically supplied to the pod sensors, modem, and control circuits at about 15 Volts, and of the order of 10 Watts is typically available to power these downhole sub-systems.

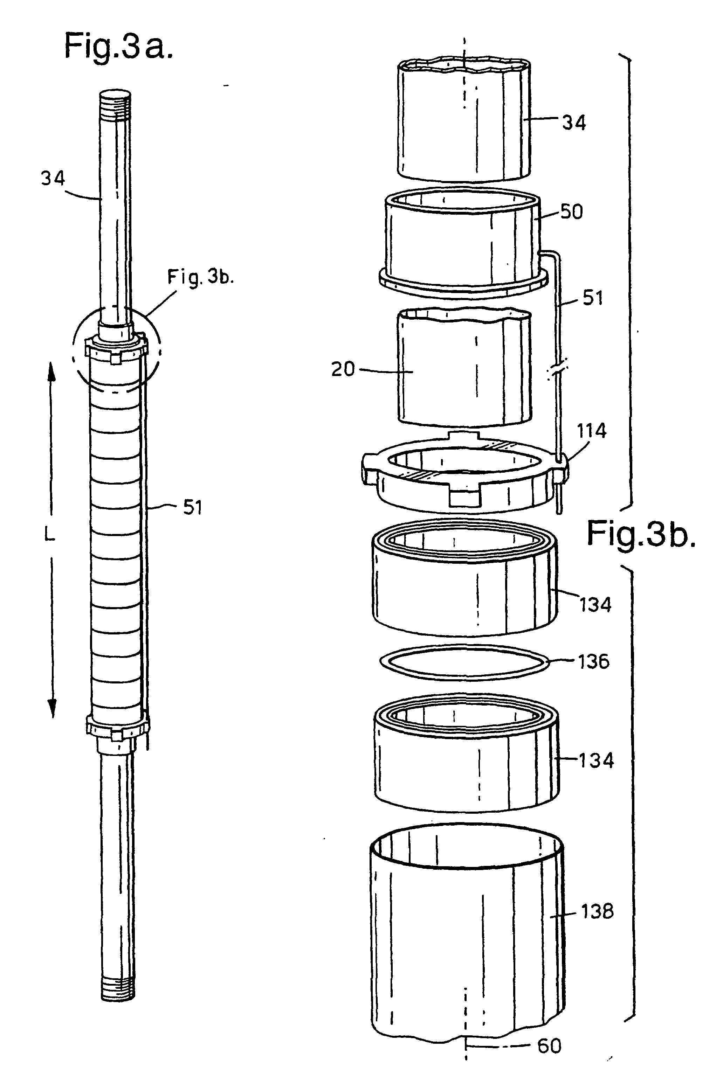

Referring to Figs. 3a and 3b, the construction of a suitable choke may be described. A choke for a given application may be divided into multiple pieces along its length (L). In other words, stacking multiple sub-sections of chokes 134 together along the choke axis 60, as shown in Figs. 3a and 3b, provides the same effect as have one large choke of length (L). Multiple sub-sections 134 stacked on top of one another act as a series of impedances, which added together provide the same total impedance as a single choke having the same total length of ferromagnetic material as the aggregated sub-sections.

Referring to Fig. 3b, the details of a suitable choke assembly are illustrated, though it will be clear to one familiar with the art that alternative designs are feasible. The tubing section 34 is composed of type 316 stainless steel and typically has an outer diameter of 3.5 inches and a length of 10 feet. Each end of the production tubing section 34 is furnished with New VAM male threads by which mating sections of conventional production tubing are attached. (New VAM is a registered Trademark of Vallourec Mannesman Oil & Gas France, and defines a thread form suitable for this purpose). At the upper and lower extremities of the choke section are welding collars 50 with internal diameter 3.55 inches, length 2 inches, and wall thickness one quarter of an inch. The section of tubing 34 between the welding collars is covered with PTFE heat-shrink tubing 20 of 0.020 inches wall thickness, and thus tubing 20 lies between the production tubing section 34 and the internal walls of all the choke sub-sections 134. Each end of the choke assembly is furnished with a machined plastic centralizer 114. A suitable machinable plastic is polyetheretherketone (PEEK) which is a commodity material available from many commercial sources

Choke sub-sections 134 are formed by winding 60 sheet laminations of a high-permeability ferromagnetic alloy such as Permalloy (Permalloy is a registered Trademark, of Western Electric Company). Permalloy is a nickel/iron alloy with a nickel content in the range 35% to 90% and is available as a commodity material from many commercial sources. A suitable alloy is composed of 86% nickel/14% iron, and the laminations are 0.014 inches thick and 2.35 inches wide such that the final dimensions of each choke section are 3.6 inches internal diameter, 5.45 inches external diameter, and 2.35 inches in the direction of the choke axis 60. Fifteen such choke sections are stacked to form a total choke assembly suitable for usual power frequencies, 50 or 60 Hertz. At power frequencies up to a few hundred Hertz, laminated ferromagnetic alloy can be used for construction of the choke sections, as in standard transformer design practice, and as described above. Lamination is required to reduce eddy current losses which would otherwise degrade the effectiveness of the choke. For material with absolute magnetic permeability of 50,000 operating at 60 Hertz the required lamination thickness for 2 skin depths is 0.8-millimeters (0.031 inches), which is realistic and practical.

Between each choke section is a polytetrafluoroethylene (PTFE) washer 136 with internal diameter 3.6 inches, external diameter 5.45 inches, and thickness 0.030 inches. After all the chokes are threaded onto the tubing, the entire section of chokes is covered with PTFE heatshrink tubing 138 having 0.020 inches wall thickness. The stainless steel rod 51 is 0.125 inches diameter covered with polyethylene (PE) heatshrink tubing and extends along the length of the completed choke assembly. It is attached to the upper welding collar 10 and passes through holes in the centralizers 114. Its lower end is electrically connected to the input of the electrical pod which is below the choke assembly.

The impedance offered by the choke is a critical implementation issue, since this determines what proportion of total power supplied to the pipe will be lost to leakage through the choke, and what proportion will be available to power and communicate with the devices installed in the isolated section of the pipe. Since the impedance presented by an inductor increases with frequency, the AC power frequency is used in both the theoretical analysis and the testing of alternative choke configurations, as this is normally equal to or lower than the communication frequencies.

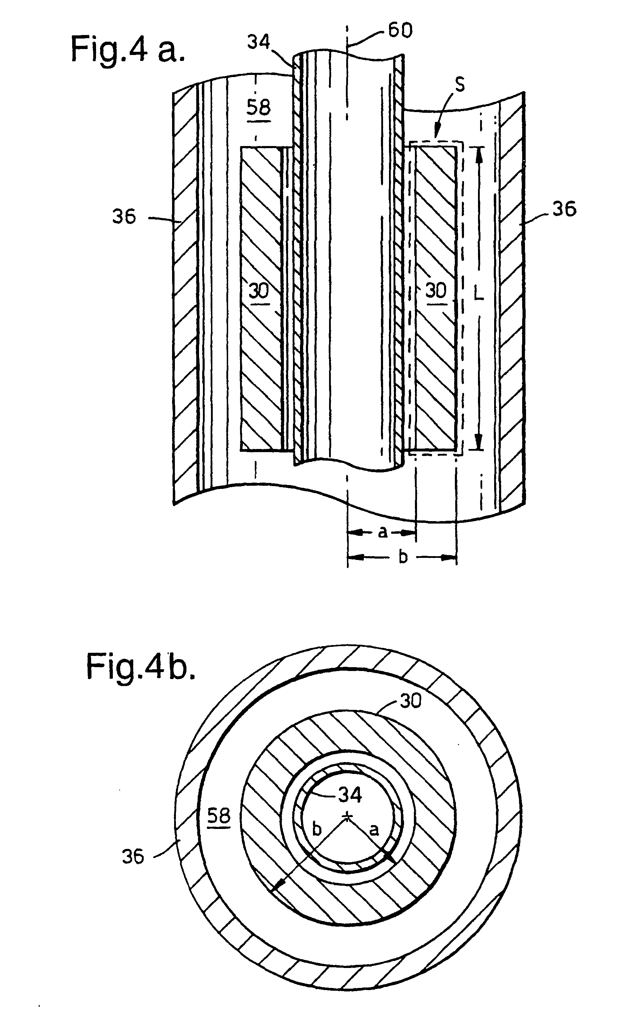

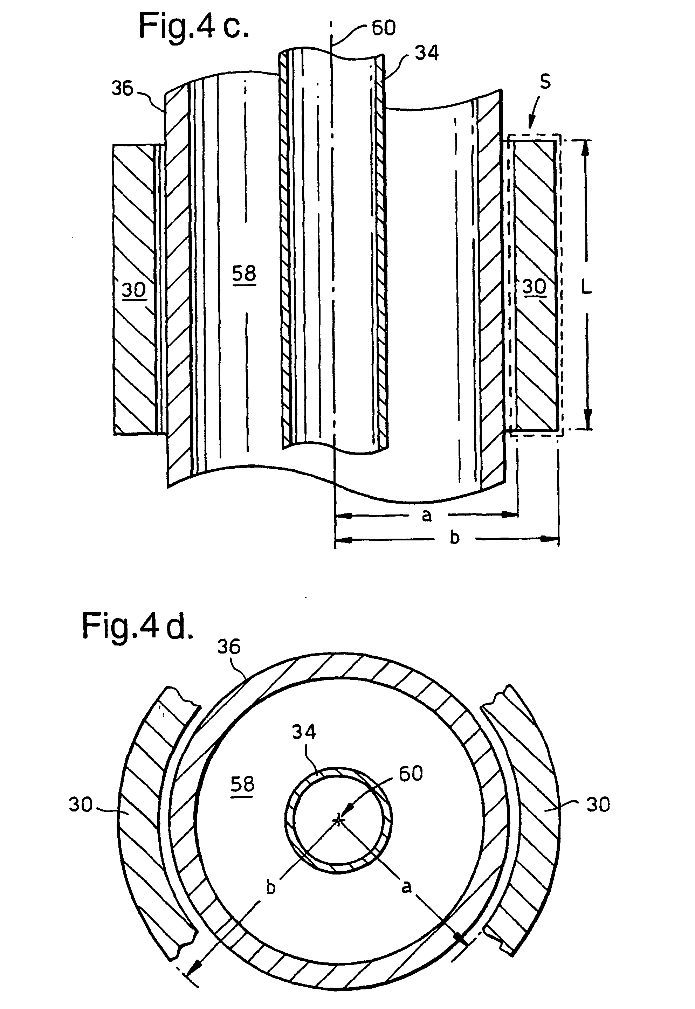

Figs. 4a-d indicate the variables used in the choke design analysis. Figs. 4a (longitudinal cross-section) and 4b (axial cross-section) illustrate the case where the choke is placed within the annulus 58 between the tubing 34 and the casing 36. Figs. 4c (longitudinal cross-section) and 4d (axial cross-section) illustrate the case where the choke is placed outside the casing 36. The basis for the analysis is the same in both cases, but it is important to realize that the electrical current value (I) used in the design analysis is the net current linked by the choke. In the case where the choke is disposed in the annulus (Figs. 4a and b), the current is that on the tubing alone. When the choke is disposed external to the casing (Figs. 4c and d), the current is the vector sum of the separate currents on the casing and tubing. Thus if these currents were equal but opposite in phase there would be no net choking effect with the configuration shown in Figs. 4c and 4d.

The defining variables and a self-consistent set of physical units are:

L = length of choke, meters;
a = choke inner radius, meters;
b = choke outer radius, meters;
r = distance from choke axis, meters;
I = r.m.s. net current through choked section, Amperes;
$\omega$ = angular frequency of leakage current, radians per second;
m = absolute magnetic permeability of choke material at radius r, equal to the absolute permeability of free space ($4\pi \times 10^{-7}$ Henrys per meter) multiplied by the relative permeability of the magnetic material of the choke.

By definition, $\omega = 2\pi f$ where f = frequency in Hertz.

At a distance r from the current I, the r.m.s. free space magnetic field H, in Henries per meter, is given by:

$$H = I/2pr.$$

The field H is circularly symmetric about the choke axis, and can be visualized as magnetic lines of force forming circles around that axis.

For a point within the choke material, the r.m.s. magnetic field B, in Teslas, is given by:

$$B = mH = \mu I/2\pi r.$$

The r.m.s. magnetic flux F contained within the choke body, in Webers, is given by:

$$F = \int B \, dS$$

where S is the cross-sectional area of the choke in square meters as shown in Fig.4b and 4d and the integration is over the area S. Performing the integration from the inner radius of the choke (a), to the outer radius of the choke (b), over the length of the choke (*L*), we obtain:

$$F = \mu LI \; ln(b/a)/2\pi$$

where *In* is the natural logarithm function.

The voltage generated by the flux F, in Volts, is given by:

$$V = \omega F = 2\pi f \; F = \mu LIf \; ln(b/a)$$

Note that the back-e.m.f. (V) is directly proportional to the length (L) of the choke for constant values of (a) and (b), the choke element internal and external radii. Thus by altering the length of the choke, any desired back-e.m.f. can be generated for a given current.

Inserting representative values:

$$\mu = 50,000 \times (4\pi \times 10^{-7}), \; L = 1 \text{ meter},$$

I = 10 Amperes, f = 60 Hertz,
a = 0.045 meters (3.6 inch inner diameter), b = 0.068 meters (5.45 inch external diameter):

then the back-e.m.f. developed V = 2.6 Volts showing that such a choke is effective in developing the required downhole voltage, and does so when realistic and safe currents and voltages are impressed upon the tubing and transmitted from the well head to down hole equipment. This example also reveals that this method for power distribution has the characteristic of operating at low voltages and relatively high currents, and for this reason it is insensitive to small amounts of current leakage between the conductors or to ground.

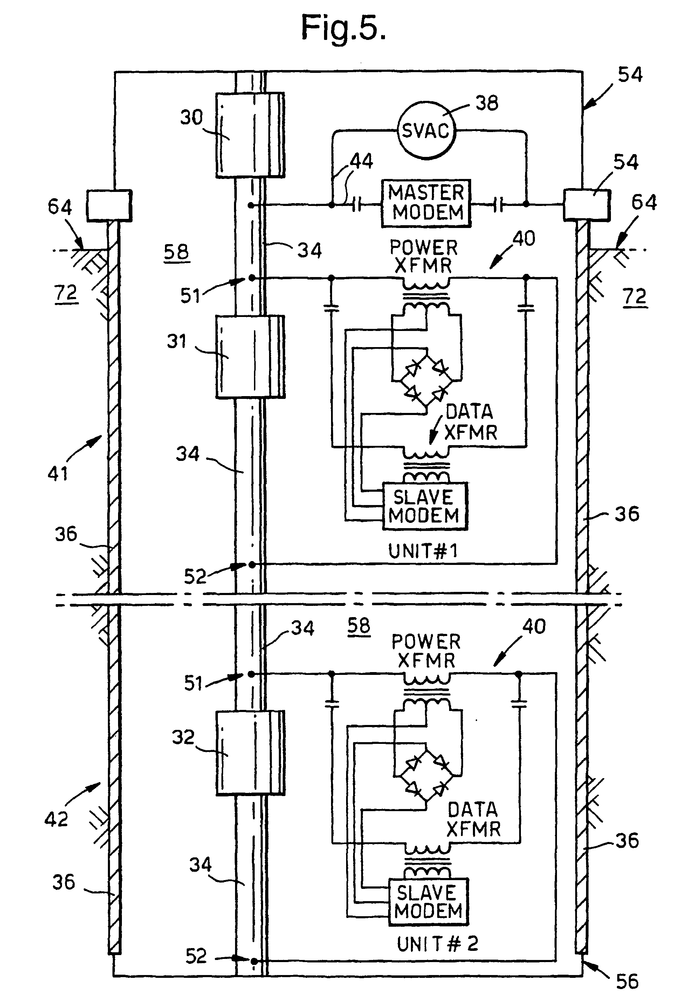

Fig. 5 illustrates in more detail the electrical connections and interface devices used to enable the transmission of both power and modem communication signals over the tubing and casing in the well of Fig. 1. In Fig. 5 the surface and downhole modems are essentially similar, and their receivers and transmitters are coupled through capacitors and a data transformer across the choke for the downhole pods, and between casing and tubing below choke 30 for the surface modem. The power for each downhole pod 40 is coupled through a power transformer to a full-wave rectifying diode bridge as shown in Fig. 5, and DC from the rectifying bridge is used to power the downhole modems and other equipment such as interface controllers for motors and/or sensors disposed in each downhole pod 40. The surface modem provides the means to communicate between a computer and the modems within each downhole pod 40, in either direction. Thus a means is provided by which the computer may transmit commands to downhole control devices such as motorized flow control valves, and for the computer to receive data from downhole sensors. The modems will generally be of the broadband digital type which are available from many standard equipment suppliers, though they may also be narrow-band and/or analog modems to reduce cost where a lower data rate is acceptable in specific cases. (Note that the term "modem" as applied here is not confined to those typically marketed to connect computers to the public telephone switching network, but includes any bidirectional data communication device adapted to signalling over a wired communication channel.)

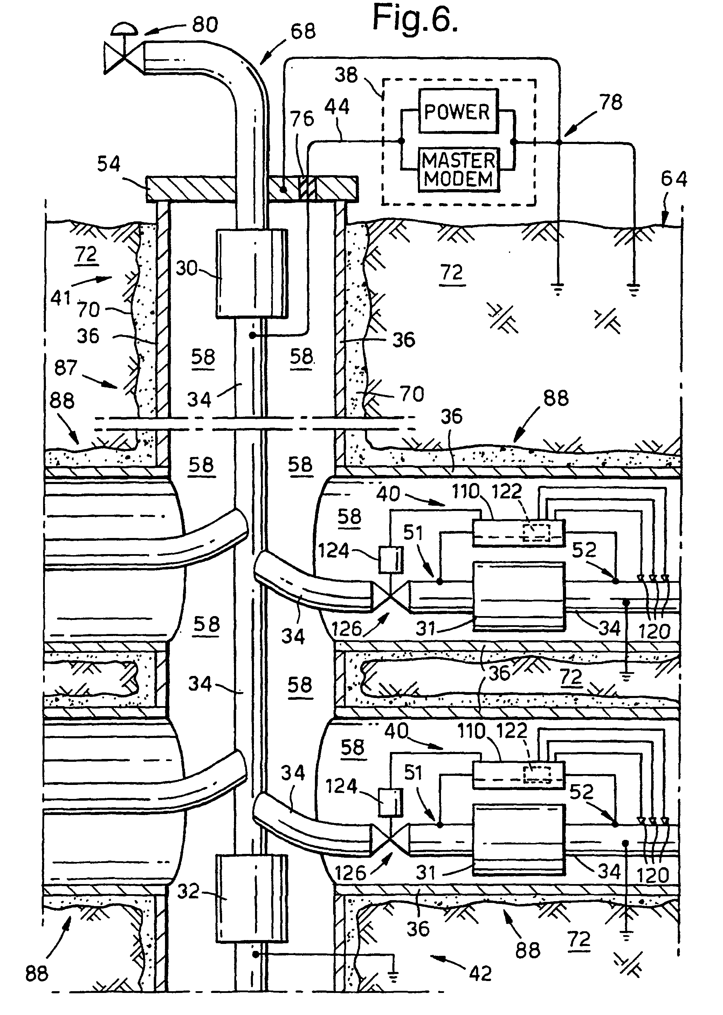

Fig. 6 illustrates a preferred embodiment for the case of a well with multilateral completion extending as a borehole with casing 36 from the surface 64 and at depth branching into laterals 88 with casings or liners which are extensions of the main borehole casing 36. Of course, the invention may be applied to all types of conventional multilateral completions such as where only a liner is used or has tubing in an open hole, etc. In Fig. 6, the production tubing 34 similarly branches into tubing for each lateral. In this example each lateral is furnished with a measurement, communications and control assembly 40 shown in detail in Fig. 6. This module is powered by the voltage developed across the choke 31 as previously described in reference to Figs. 1-3 and 5.

Referring still to Fig. 6, AC power is fed down the tubing 34 from an AC power source within the surface equipment 38. Since the laterals terminate within the producing formation, each lateral production tubing section beyond chokes 31 is electrically in intimate contact with the formation fluids and is thus effectively grounded at distance from the main borehole as is shown by the ground connections 72. This ground return is used to complete the electrical circuit between the surface equipment and the downhole modules.

A choke 30 is provided at the wellhead to act as an impedance to current flow between the tubing and the casing by way of the tubing hanger 54, which would otherwise provide a short circuit between the tubing and the casing. To fulfill the same purpose and as illustrated in Fig. 1 an insulating tubing joint 146 may be substituted for the choke 30 of Fig. 5. A choke 32 is provided at depth on the main borehole tubing section below the connection point of the lowest lateral. This choke 32 prevents loss of the current fed down the tubing 34 so that it is available to power the modules in the laterals.

Upon reaching a lateral the AC current impressed on the tubing at the surface encounters choke 31, which acts as an impedance. Consequently, a voltage potential is developed on the tubing section where it passes through each choke 31, and this potential may be used to power electronic devices.

In particular, each module 40 powers sensors 120, such as pressure, flow, temperature, acoustic spectrum, produced fluids composition etc. and communicates the data from the sensors to the surface. Similarly, module 40 powers a control valve 126 driven by motor 124 under control of the electronics module 110 which receives control commands sent from the surface modem within the surface equipment 38 by way of the downhole modems 122. Such a valve may be used to regulate the fluid flow into and out of the each lateral 88. Because each module, device, and sensor on each lateral is separately addressable from the surface, each such device or sensor can be independently operated or monitored from the surface. In such a multilateral completion, it is necessary and desirable to control fluid flow independently in each lateral during production. Knowledge of the flow rate, fluid make-up, pressure, temperature, etc. in each lateral is valuable to optimize production efficiency.

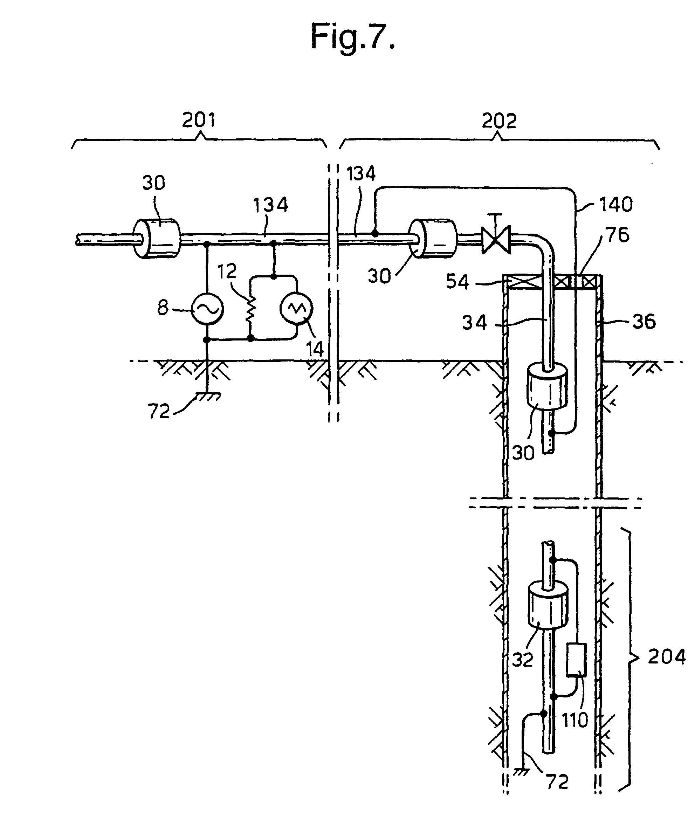

Fig. 7 illustrates an embodiment using the methods of the present invention in the case where it is desired to locate the surface power and communications equipment at a distance from the well head. The power and communications elements located at the central field facility 201 comprise collector tubing 134, a choke 30, an AC power source 8, the modem receiver represented by its input impedance 12, and the modem transmitter represented by its AC generator 14. One side of the power and modem elements is connected to ground 72, and the other side is connected to the collector tubing 134.

Referring still to Fig. 7, the collector tubing 134 extends from the central facility 201 to the wellhead location 202. At the wellhead the collector tubing is furnished with choke 30, and an electrical cable 140 carries the power and communications AC through the insulating feedthrough 76 to the production tubing below the well upper choke. By this means the power and communications ACs are not required to pass over the section of production tubing where it passes into the well. In standard well construction practice this section of the tubing 34 is electrically connected to the casing 36 at the point where it passes through the tubing hanger 54, and in this case the separate electrical connection 140 is required. If non-standard construction practice is acceptable, then the use of electrically isolating tubing joints and feedthroughs may eliminate the need for the separate conductor 140 and its associated chokes.

At depth 204 in the well, the production tubing 34 is furnished with a choke 32 and an electrical pod 110. These function as described in reference to Figs. 1 and 2, with the return connection from the downhole equipment being effected by the downhole ground connection 7.

It will be clear to those skilled in the art that the effect of the inductive chokes in offering an impedance to AC current flow can be exploited in a variety of ways as alternative embodiments for the provision and distribution of power and communications along the metal "piping structures" of wells.

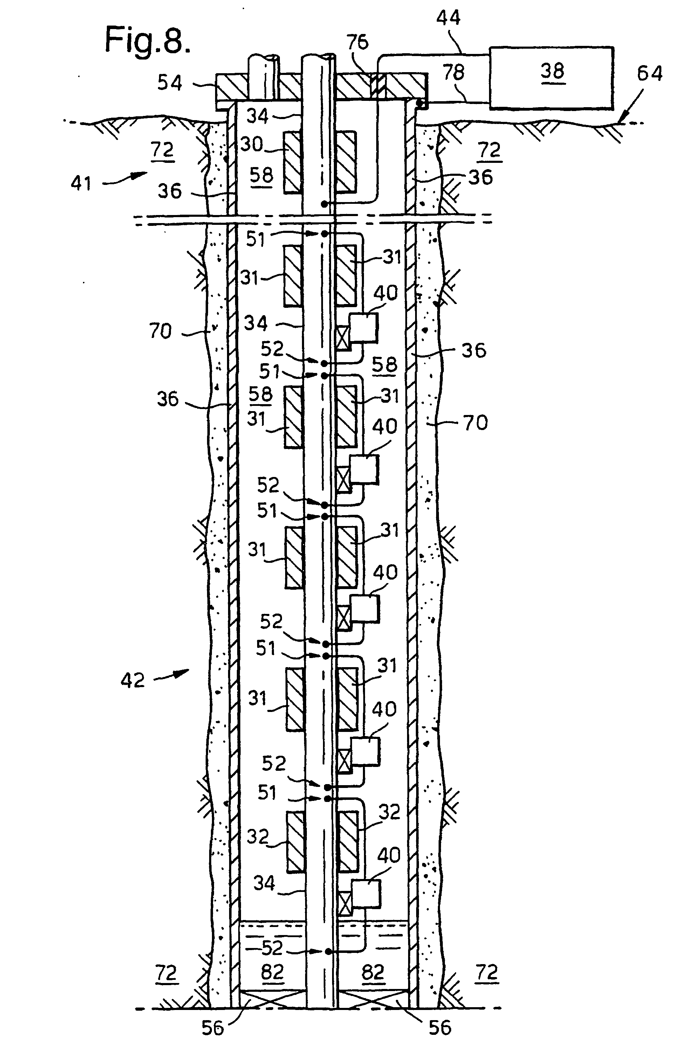

Fig. 8 shows a petroleum well application in accordance with an alternative embodiment of the present invention. This embodiment is similar to the first embodiment (see Fig. 1), but illustrates that there can be a plurality of chokes 31 with associated devices 40 at any location between the upper and lower chokes 30, 32. This embodiment may be useful in an application where a conductive fluid 82 is present in the annulus 58 before unloading of a gas-lift well. Each choke 31, 32 will not work sufficiently to develop a voltage potential at its respective device 40 when the choke is submerged in conductive fluid 82. As the conductive fluid 82 is progressively removed by the unloading process, each device 40 can receive power and/or communications (thus being controllable) when its respective choke (31 or 32) is no longer submerged in conductive fluid. Hence, as the conductive fluid level drops during unloading, the devices 40 sequentially become controllable, which can aid in achieving a more controllable unloading procedure. In the configuration shown in Fig. 8 the electrical potentials generated by the chokes 31 add serially to determine the voltage which must be applied at the wellhead by the surface equipment 38 through the conductor 44.

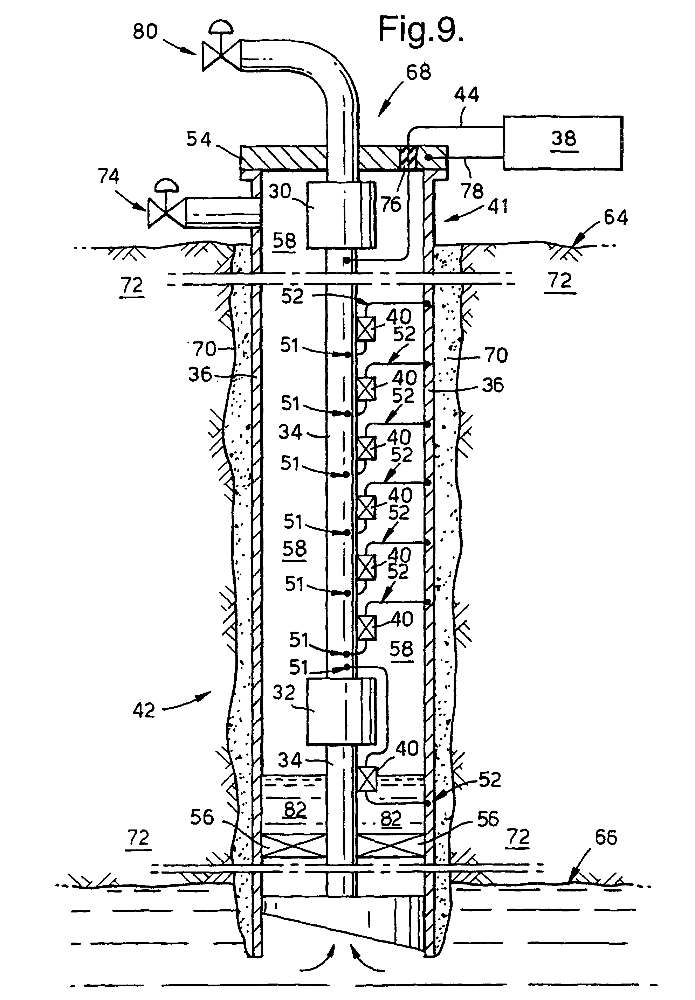

Fig. 9 illustrates schematically a well similar to that of Fig. 8, furnished with a plurality of downhole electrical control, measurement and communication modules 40. In this embodiment the power for each pod is derived from the voltage developed between the tubing 34 and the casing 36, by the chokes 30 and 32. In contrast to the serial connections of the embodiment of Fig. 7, in the embodiment of Fig. 9 the electrical connections to the downhole modules 40 are in parallel. In this embodiment therefore the voltage which must be applied at the wellhead by the surface equipment 38 through the conductor 44 remains the same regardless of the number of downhole modules, but the current which must be supplied is in proportion to the number of downhole modules. This embodiment would be inoperable so long as conductive fluid were present in the annulus above the lower choke 32, but it has the advantage that the wellhead electrical potential remains low and therefore safe regardless of the number of downhole modules.

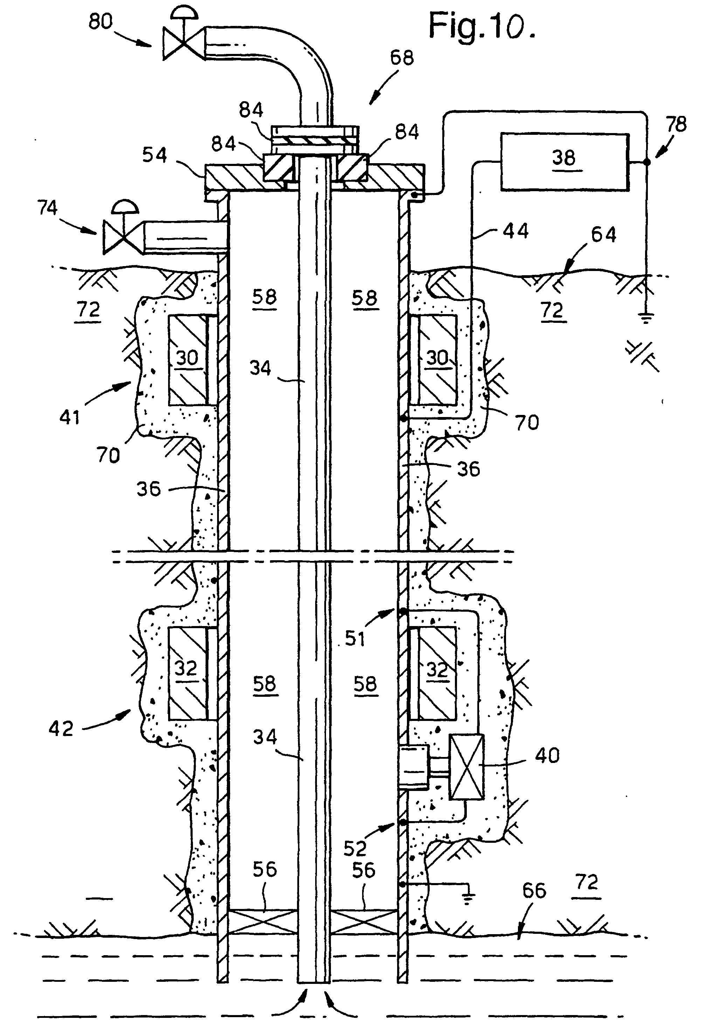

Fig. 10 shows a petroleum well application in accordance with another alternative embodiment of the present invention, in which it is desired to provide power to downhole measurement, control and communications modules external to the well casing. *See also,* Figs. 4c and 4d. In this embodiment the piping structure used to carry the current comprises the tubing 34 and the casing 36 together. The electrical return comprises the earthen ground 72. Hence, the tubing 34 and casing 36 must be substantially electrically insulated from the earth 72. Cement 70 between the casing 36 and the earthen ground 72 can provide some insulation, depending on the type of cement. Also, an electrically nonconductive liner or coating can be used, between the casing 36 and the cement 70, between the cement 70 and the earth 72, or in both locations. In particular, normal corrosion control coatings on the exterior of the casing will usually provide a significant degree of electrical isolation between the casing and the ground. Insulators 84 are used near the surface to electrically isolate the tubing 34 and casing 36 from the earth 72. The electromagnetic principle of this embodiment remains the same as in the previous embodiments, as analyzed in reference to Figs. 4c and 4d, whereby it is shown that the effect of the choke 30 of Fig. 10 offers an impedance to current flow in both the tubing 34 and the casing 36, and therefore generates a potential difference between the casing section above the choke with respect to the casing section below the choke. It is important to note that the tubing 34 cannot be used as a return current path for current supplied on the casing, since such return current would then link the choke, which would become inoperable. The earthen ground return path does not link the choke, and therefore is required. Thus, this embodiment of the present invention is yet another way to accomplish the goal of providing electrical power and/or communications to a device 40 downhole using the tubing 34 and casing 36 as part of an electrical path in a circuit.

## Claims

1. A current impedance device for routing a time-varying electrical current in a piping structure (34), comprising an induction choke (32) enveloping a portion of said piping structure (34); **characterized in that** an electrical device (38,40) is electrically connected to said piping structure (34) above and below of said choke (30,32), and that a voltage potential is developed across said connection points when the time-varying electrical current is transmitted through and along said portion of said piping structure (34) such that a portion of said current travels through said device (38,40).

2. A current impedance device in accordance with claim 1, wherein said choke (32) is generally cylindrical shaped with a generally cylindrical shaped borehole formed therethrough, said borehole being adapted to receive said portion of said piping structure (34) therein.

3. A current impedance device in accordance with claim 1, further comprising an insulating shell (138) that substantially covers the surfaces of said induction choke (32).

4. A current impedance device in accordance with claim 1, wherein said induction choke (32) comprises a ferromagnetic material.

5. A current impedance device with claim 1, wherein said choke (32) has a relative permeability in the range of 1,000-150,000.

6. A current impedance in accordance with claim 1, wherein two or more induction chokes (32) are distributed along the length of a piping structure (34) within at least one branch (88) of a petroleum well.

7. A current impedance device in accordance with claim 6, wherein said piping structure includes at least a portion of a production tubing string (34) for the well and the time varying current is transmitted along the portion of the production tubing (34).

8. A current impedance device in accordance with claim 6, wherein said piping structure includes at least a portion of a well casing (36) for the well and the time varying current is transmitted along the portion of the well casing (36).

9. A current impedance device in accordance with claim 1, wherein two or more induction chokes (32) are distributed within at least one branch of a piping structure in an oil refinery.

10. A current impedance device in accordance with claim 1, wherein the electrical return comprises at least a portion of an earthen ground (72).

11. A current impedance device in accordance with claim 10, wherein said electrical return comprises at least a portion of a conductive fluid (82).

12. A current impedance device in accordance with claim 1, wherein said device comprises a control module (31) adapted to control and communicate with at least one additional electronic component electrically connected thereto.

13. A current impedance device in accordance with claim 1, wherein said device comprises an electrically controllable and electrically actuated valve (40).

14. A current impedance device in accordance with claim 1, wherein said device comprises a sensor for data acquisition.

15. A current impedance device in accordance with claim 1, further comprising:

an electrical insulator (84) located at a first end of said piping structure (34), said insulator (84) being between said piping structure (34) and said electrical return such that said piping structure is electrically insulated from said electrical return along said first end.

16. A current impedance device in accordance with claim 1, further comprising a computer system (39) adapted to send and receive data to and from said device (40) via said electric circuit.

17. A method of operating a petroleum well having a pipe (34) disposed in the earth comprising the steps of:

providing an induction choke (32) coupled to the pipe (34) downhole and disposed in enveloping relationship to the pipe (34);
coupling time varying current to the pipe (34);

**characterized in that**
a device (40) is connected to the pipe (34) above and below the choke (32);
time varying current is inhibited to flow distal to the choke (32), such that a voltage potential is developed across the connection points; and

said device (40) is operated with said voltage potential.

**Patentansprüche**

1. Stromimpedanzvorrichtung zum Weiterleiten eines zeitvarianten Stromes in einem Rohraufbau (34) mit einer Induktionsdrossel (32), die einen Teil des Rohraufbaues (34) umhüllt;
**dadurch gekennzeichnet, daß**
eine elektrische Vorrichtung (38, 40) mit dem Rohraufbau (34) oberhalb und unterhalb der Drossel (30, 32) elektrisch verbunden ist, und daß
ein Spannungspotential über die Anschlußstellen ausgebildet wird, wenn der zeitvariante Strom durch den und entlang des Teil/es des Rohraufbaues (34) geleitet wird, so daß ein Teil des Stromes durch die Vorrichtung (38, 40) fließt.

2. Stromimpedanzvorrichtung nach Anspruch 1, wobei die Drossel (32) allgemein zylindrisch geformt ist und eine **dadurch** ausgebildete allgemein zylindrisch geformte Bohrung aufweist, wobei die Bohrung derart ausgebildet ist, daß sie den Teil des Rohraufbaues (34) darin aufnimmt.

3. Stromimpedanzvorrichtung nach Anspruch 1, ferner umfassend eine Isolierumhüllung (138), welche die Oberfläche der Induktionsdrossel (32) im wesentlichen bedeckt.

4. Stromimpedanzvorrichtung nach Anspruch 1, wobei die Induktionsdrossel (32) ein ferromagnetisches Material umfaßt.

5. Stromimpedanzvorrichtung nach Anspruch 1, wobei die Drossel (32) eine relative Durchlässigkeit im Bereich von 1.000 - 150.000 aufweist.

6. Stromimpedanzvorrichtung nach Anspruch 1, wobei zwei oder mehr Induktionsdrosseln (32) entlang der Länge des Rohraufbaues (34) innerhalb zumindest eines Stranges (88) eines Erdölschachtes verteilt sind.

7. Stromimpedanzvorrichtung nach Anspruch 6, wobei der Rohraufbau zumindest einen Teil eines Förderrohrstranges (34) für den Schacht umfaßt und der zeitvariante Strom entlang des Teiles des Förderrohres (34) geleitet wird.

8. Stromimpedanzvorrichtung nach Anspruch 6, wobei der Rohraufbau zumindest einen Teil einer Schachtauskleidung (36) für den Schacht umfaßt und der zeitvariante Strom entlang des Teiles der Schachtauskleidung (36) geleitet wird.

**9.** Stromimpedanzvorrichtung nach Anspruch 1, wobei zwei oder mehr Induktionsdrosseln (32) innerhalb zumindest eines Stranges eines Rohraufbaues in einer Erdölraffinerie verteilt sind.

**10.** Stromimpedanzvorrichtung nach Anspruch 1, wobei die elektrische Rückleitung zumindest einen Teil einer Erdung (72) umfaßt.

**11.** Stromimpedanzvorrichtung nach Anspruch 10, wobei die elektrische Rückleitung zumindest einen Teil eines leitenden Fluids (82) umfaßt.

**12.** Stromimpedanzvorrichtung nach Anspruch 1, wobei die Vorrichtung ein Steuermodul (31) umfaßt, das eingerichtet ist, um zumindest eine daran elektrisch angeschlossene zusätzliche elektronische Komponente zu steuern und mit dieser zu kommunizieren.

**13.** Stromimpedanzvorrichtung nach Anspruch 1, wobei die Vorrichtung ein elektrisch steuerbares und elektrisch betätigtes Ventil (40) umfaßt.

**14.** Stromimpedanzvorrichtung nach Anspruch 1, wobei die Vorrichtung einen Sensor zur Datenerfassung umfaßt.

**15.** Stromimpedanzvorrichtung nach Anspruch 1, ferner umfassend:

einen an einem ersten Ende des Rohraufbaues (34) angeordneten elektrischen Isolator (84), wobei der Isolator (84) zwischen dem Rohraufbau (34) und der elektrischen Rückleitung angeordnet ist, so daß der Rohraufbau entlang des ersten Endes von der elektrischen Rückleitung elektrisch isoliert ist.

**16.** Stromimpedanzvorrichtung nach Anspruch 1, ferner umfassend ein Computersystem (39), das eingerichtet ist, um Daten über den elektrischen Kreis an die Vorrichtung (40) zu senden und von dieser zu empfangen.

**17.** Verfahren zum Betrieb eines Erdölschachtes mit einem in der Erde angeordneten Rohr (34), umfassend die Schritte:

Bereitstellen einer mit dem Rohr (34) unterirdisch gekoppelten und in umhüllender Beziehung mit dem Rohr (34) angeordneten Induktionsdrossel (32);

Koppeln des zeitvarianten Stromes mit dem Rohr (34);

**dadurch gekennzeichnet, daß**

eine Vorrichtung 40 oberhalb und unterhalb der Drossel (32) mit dem Rohr (34) verbunden ist; der zeitvariante Strom daran gehindert wird, distal zu der Drossel (32) zu fließen, so daß ein Spannungspotential über die Anschlußstellen ausgebildet wird; und die Vorrichtung (40) mit dem Spannungspotential betrieben wird.

## Revendications

**1.** Dispositif à impédance de courant pour acheminer un courant électrique variant dans le temps dans une structure de tuyauterie (34), comprenant une bobine d'induction (32) enveloppant une partie de ladite structure de tuyauterie (34), **caractérisé en ce qu'**un dispositif électrique (38, 40) est électriquement connecté à ladite structure de tuyauterie (34) au-dessus et en dessous de ladite bobine (30, 32) et **en ce qu'**un potentiel de tension est développé sur lesdits points de connexion quand le courant électrique variant dans le temps est transmis par et le long de ladite partie de ladite structure de tuyauterie (34) de telle manière qu'une partie dudit courant traverse ledit dispositif (38, 40).

**2.** Dispositif à impédance de courant selon la revendication 1, dans lequel ladite bobine (32) est de forme généralement cylindrique avec une forure de forme généralement cylindrique formée à travers celle-ci, ladite forure étant adaptée pour recevoir en son sein ladite partie de ladite structure de tuyauterie (34).

**3.** Dispositif à impédance de courant selon la revendication 1, comprenant en outre une gaine isolante (138) qui couvre sensiblement les surfaces de ladite bobine d'induction (32).

**4.** Dispositif à impédance de courant selon la revendication 1, dans lequel ladite bobine d'induction (32) comprend une matière ferromagnétique.

**5.** Dispositif à impédance de courant selon la revendication 1, dans lequel ladite bobine (32) a une perméabilité relative de l'ordre de 1000 - 150 000.

**6.** Dispositif à impédance de courant selon la revendication 1, dans lequel deux bobines d'induction (32) ou plus sont réparties le long de la longueur d'une structure de tuyauterie (34) dans au moins une branche (88) d'un puits de pétrole.

**7.** Dispositif à impédance de courant selon la revendication 6, dans lequel ladite structure de tuyauterie comprend au moins une partie d'un train de tubes de production (34) pour le puits et le courant variant dans le temps est transmis le long de la partie des tubes de production (34).

8. Dispositif à impédance de courant selon la revendication 6, dans lequel ladite structure de tuyauterie comprend au moins une partie d'un tubage (36) pour le puits et le courant variant dans le temps est transmis le long du tubage (36) de puits.

9. Dispositif à impédance de courant selon la revendication 1, dans lequel deux bobines d'induction (32) ou plus sont réparties dans au moins une branche d'une structure de tuyauterie dans une raffinerie de pétrole.

10. Dispositif à impédance de courant selon la revendication 1, dans lequel le retour électrique comprend au moins une partie d'une mise à la terre (72)

11. Dispositif à impédance de courant selon la revendication 10, dans lequel ledit retour électrique comprend au moins une partie d'un fluide conducteur (82).

12. Dispositif à impédance de courant selon la revendication 1, dans lequel ledit dispositif comprend un module de contrôle (31) adapté pour contrôler et communiquer avec au moins un composant électronique supplémentaire qui y est électriquement connecté.

13. Dispositif à impédance de courant selon la revendication 1, dans lequel ledit dispositif comprend une valve électriquement contrôlable et électriquement actionnée.

14. Dispositif à impédance de courant selon la revendication 1, dans lequel ledit dispositif comprend un capteur pour l'acquisition de données.

15. Dispositif à impédance de courant selon la revendication 1, comprenant en outre :

   un isolateur électrique (84) situé à une première extrémité de ladite structure de tuyauterie (34), ledit isolateur (84) étant entre ladite structure de tuyauterie (34) et ledit retour électrique de manière que ladite structure de tuyauterie soit électriquement isolée dudit retour électrique le long de ladite première extrémité.

16. Dispositif à impédance de courant selon la revendication 1, comprenant en outre un système d'ordinateur (39) adapté pour envoyer des données audit dispositif (40) et en recevoir par l'intermédiaire dudit circuit électrique.

17. Procédé d'exploitation d'un puits de pétrole ayant un tuyau (34) disposé dans la terre comprenant les étapes consistant à :

   prévoir une bobine d'induction (32) couplée au tuyau (34) au fond du trou et disposée dans un rapport enveloppant avec le tuyau (34),
   coupler le courant variant dans le temps au tuyau (34),

   **caractérisé en ce que**
   un dispositif (40) est connecté au tuyau (34) au-dessus et en dessous de la bobine (32),
   le courant variant dans le temps est inhibé pour passer à distance de la bobine (32) de manière qu'un potentiel de tension soit développé sur les points de connexion, et
   ledit dispositif (40) est actionné avec ledit potentiel de tension.

# Fig.1.

# Fig.2.

# Fig.3a.

Fig.3b.

# Fig.3b.

# Fig.4 a.

34  60

58  S

36  36

30  30

L

a

b

# Fig.4b.

30

34

58

36

b  a

## Fig.4 c.

## Fig.4 d.

# Fig.5.

# Fig.6.

# Fig.7.

Fig.8.

# Fig.9.

Fig.10.